# EUROPÄISCHE PATENTSCHRIFT

(11) **EP 3 272 944 B1**
(45) Veröffentlichungstag und Bekanntmachung des Hinweises auf die Patenterteilung: **13.05.2020**
(21) Anmeldenummer: 17178989.4
(22) Anmeldetag: 30.06.2017
(51) Int. Cl.: E02D 3/046, E02D 3/054, E02D 7/08

(54) **SCHLAGZAHLOPTIMIERUNG**
STROKE RATE OPTIMISATION
OPTIMISATION DU COMPTAGE DE BATTEMENTS

(30) Priorität: 19.07.2016 DE 102016008819
(43) Veröffentlichungstag der Anmeldung: 24.01.2018
(73) Patentinhaber: Liebherr-Werk Nenzing GmbH, 6710 Nenzing (AT)
(72) Erfinder: Jussel, Patrick, Dr., 6700 Bludenz (AT); Fink, Lukas, 6714 Nüziders (AT)
(74) Vertreter: Laufhütte, Dieter

(56) Entgegenhaltungen:
- EP-A1- 0 413 189
- EP-A1- 2 393 992
- DE-A1-102007 062 301
- JP-A- S60 195 218

## Beschreibung

Die Erfindung betrifft ein Verfahren zur Bodenverdichtung mittels einer Trägermaschine mit an wenigstens einem Seil vorgesehenen Rammgut und mit einer Regelungs-/Steuerungsvorrichtung, wobei das Verfahren als einen ersten Schritt das Anheben des Rammguts von der zu verdichtenden Bodenfläche umfasst, wobei ein Nullpunkt gespeichert wird, bei dem kein Schlappseil vorhanden ist. Als nächstes wird das Rammgut auf eine Hubhöhe angehoben und dann der Verdichtungsvorgang durch das Herabfallenlassen des Rammguts auf die zu verdichtende Bodenfläche aus einer entsprechenden Fallhöhe bewirkt.

Das Rammgut wird dann erneut angehoben und zuvor ein weiterer entsprechender Nullpunkt abgespeichert. Verfahrensgemäß wird dann ein auftretender Verdichtungsfortschritt bestimmt und gespeichert und die vorherigen Schritte so lange wiederholt, bis die Verdichtungsfortschritte einer bestimmten Anzahl von aufeinanderfolgenden Verdichtungsvorgängen kleiner als oder gleich wie ein vorbestimmter Mindestfortschritt sind.

Aus dem Stand der Technik ist es bekannt, der Bedienperson einer Bodenverdichtungsmaschine bzw. einer Trägermaschine zur Bodenverdichtung vorzugeben, mit wie vielen definierten Schlägen eine entsprechende Bodenverdichtung durchzuführen ist. Hierzu sind vorbereitende Berechnungen notwendig, anhand derer in Abhängigkeit von der Bodenbeschaffenheit des zu verdichtenden Bodens eine Anzahl von zur Bodenverdichtung notwendigen Schlägen bestimmt wird.

Alternativ oder zusätzlich ist es auch bekannt, mittels einer Messung dynamisch zu ermitteln, ob ein erreichter Verdichtungsgrad ausreichend ist. Dementsprechend kann ermittelt werden, ob weitere Schläge bzw. Verdichtungsarbeiten notwendig sind. Nachteiliger Weise sind zur Durchführung der Messungen allerdings zusätzliche Gerätschaften notwendig. Dies bedeutet einen erhöhten Aufwand sowohl bei der Beschaffung der entsprechenden Gerätschaften als auch bei deren Einsatz.

DE 102007062301 A1 offenbart eine Steuerung für eine Rammvorrichtung, durch welche ein Seil mit einer vorgebbaren Länge entsprechend einem vorherigen Rammfortschritt zuzüglich der Hubhöhe des Rammgewichts abtrommelbar ist.

Aufgabe der Erfindung ist es daher, ein verbessertes Verfahren zur Bodenverdichtung bereitzustellen, wobei insbesondere keine zusätzlichen Messsysteme zur Bestimmung des Verdichtungsfortschritts erforderlich sind und eine vereinfachte Vorrichtung genutzt werden kann.

Diese Aufgabe wird erfindungsgemäß durch ein Verfahren zur Bodenverdichtung mittels einer Trägermaschine mit den Merkmalen des Anspruchs 1 gelöst. Vorteilhafte Ausbildungen sind Gegenstand der Unteransprüche. Demnach ist ein Verfahren zur Bodenverdichtung mittels einer Trägermaschine beansprucht, wobei die Trägermaschine an wenigstens einem Seil vorgesehenes Rammgut und eine Regelungs-/Steuerungsvorrichtung umfasst und wobei das Verfahren die Schritte umfasst:
Anheben des Rammguts von der zu verdichtenden Bodenfläche, wobei ein Nullpunkt gespeichert wird, bei dem kein Schlappseil vorhanden ist;
Anheben des Rammguts auf eine Hubhöhe;
Durchführen eines Verdichtungsvorgangs durch Herabfallenlassen des Rammguts auf die zu verdichtende Bodenfläche aus einer Fallhöhe;
Neuerliches Anheben des Rammguts von der zu verdichtenden Bodenfläche, wobei ein weiterer Nullpunkt gespeichert wird, bei dem kein Schlappseil vorhanden ist;
Bestimmen und Speichern eines Verdichtungsfortschritts;
Wiederholen der vorherigen Schritte, bis die Verdichtungsfortschritte einer vorbestimmten Anzahl von aufeinanderfolgenden Verdichtungsvorgängen kleiner als oder gleich wie ein vorbestimmter Mindestfortschritt sind.

Mit dem Begriff Schlappseil ist hierbei gemeint, dass das das Rammgut tragende Seil nicht völlig unbelastet ist, sondern vielmehr wenigstens ein Teil der Gewichtskraft des Rammguts vom Seil getragen ist. Das Seil ist damit wenigstens teilweise durch die Gewichtskraft des Rammguts unter Spannung gesetzt und hängt dadurch als Schlappseil schlapp bzw. unbelastet durch. Zur Bestimmung der Nullpunkte ist es entscheidend, dass im Zeitpunkt der Messung bzw. Speicherung des Nullpunkts kein Schlappseil vorliegt, da sonst nicht der korrekte Nullpunkt und damit nicht die korrekte Entfernung zwischen beispielsweise Nullpunkt und Hubhöhe ermittelt werden könnte. Der Nullpunkt kann dabei beispielsweise als Funktion der Länge des abgespulten bzw. aufgespulten Seils bestimmt bzw. gespeichert werden.

Die Begriffe des Nullpunkts und des Verdichtungsfortschritts werden im weiter unten beschriebenen Ausführungsbeispiel näher definiert. Die vorbestimmte Anzahl von aufeinanderfolgenden Verdichtungsvorgängen kann durch eine Bedienperson an der Regelungs-/Steuerungsvorrichtung eingegeben werden. Denkbar ist auch, dass diese Anzahl in der Regelungs-/Steuerungsvorrichtung hinterlegt ist und/oder von dieser abgefragt und von einer Bedienperson entsprechend eingegeben werden muss. Gleiches gilt für den vorbestimmten Mindestfortschritt, der von der Bedienperson angegeben werden kann oder auch alternativ oder zusätzlich in der Regelungs-/Steuerungsvorrichtung hinterlegt sein kann.

In einer bevorzugten Ausführung ist denkbar, dass das Verfahren anzeigt und/oder beendet wird, wenn die Verdichtungsfortschritte einer vorbestimmten Anzahl von aufeinanderfolgenden Verdichtungsvorgängen kleiner als oder gleich wie ein vorbestimmter Mindestfortschritt sind. Damit kann verfahrensgemäß das Verdichten automatisch beendet werden, wenn ein gewünschter Verdichtungsgrad des Bodens erreicht ist. Das Erreichen eines gewünschten Verdichtungsgrades ist hierbei eine Funktion von dem eingegebenen oder hinterlegten Mindestfortschritt und der vorbestimmten Anzahl hierzu notwendiger Verdichtungsvorgänge. Verfahrensgemäß kann auch vorgesehen sein, dass lediglich das Erreichen des entsprechenden Verdichtungsgrades der Bedienperson beispielsweise über eine Anzeige der Regelungs-/Steuerungsvorrichtung angezeigt wird.

In einer weiteren bevorzugten Ausführung ist denkbar, dass der Nullpunkt durch eine Null-Kalibrierung bestimmt und/oder durch eine Sensorik erfasst wird. Der Nullpunkt kann so beispielsweise manuell durch eine Bedienperson eingestellt werden, in dem das Rammgut auf den Boden abgelegt wird und das Seil, welches das Rammgut trägt, angespannt wird ohne das Rammgut vom Boden abzuheben. Diese Position des Rammguts entspricht dem Nullpunkt und ist der dabei abgespulten oder aufgespulten Seillänge zuordenbar. Der Nullpunkt kann auch automatisch über eine entsprechende Sensorik erfasst werden, wobei das Rammgut ebenfalls auf den Untergrund abgelegt werden kann und mittels der Sensorik festgestellt werden kann, ob das Seil, welches das Rammgut trägt, belastet bzw. angespannt ist und somit kein Schlappseil vorliegt. Damit kann auch automatisch ein Nullpunkt und seine entsprechende Seillänge erfasst werden.

In einer besonders bevorzugten Ausführung ist denkbar, dass die Sensorik zur Erfassung des Nullpunkts die Leistung eines Windenmotors, der Trägermaschine und/oder Lastmesssignale der Last am Seil, insbesondere mittels Lastmessbolzen in Seilrollen und oder Dehnmesszellen im oder am Seil oder in Seilverstrebungen, misst. Somit können üblicherweise an der Trägermaschine vorhandene Einrichtungen bzw. Sensoren zur Ermittlung des Nullpunkts genutzt werden und eine zusätzliche und nachteilig teure und umständliche Bereitstellung entsprechender Einrichtungen ist vorteilhafterweise nicht nötig.

In einer weiteren bevorzugten Ausführung ist denkbar, dass die Hubhöhe des Rammguts über eine Seillängenmessung insbesondere über die Anzahl der Umdrehungen der Seilwinde automatisch festgestellt oder manuell eingestellt wird. Ferner ist es denkbar, dass die Hubhöhe für alle Verdichtungsvorgänge konstant ist. Damit kann sichergestellt werden, dass bei jedem Verdichtungsvorgang die gleiche Energie in die Bodenfläche eingeführt wird und dadurch eine gleichmäßige Verdichtung erfolgen kann.

In einer weiteren bevorzugten Ausführung ist denkbar, dass das Seil beim, vor dem und/oder nach dem Auftreffen des Rammguts auf die zu verdichtende Bodenfläche abgebremst wird. Dadurch kann eine Schlappseilbindung effektiv verhindert oder reduziert werden und die Verdichtung kann so beschleunigt durchgeführt werden.

Es ist auch denkbar, in einer bevorzugten Ausführung die Verfahrensschritte nach Anspruch 1 auch dann zu wiederholen, wenn eine zulässige Toleranz bei Wandeinbrüchen (Yₜₒₗ) unter- oder überschritten wird. Demnach ist es verfahrensgemäß möglich, etwaige Wandeinbrüche automatisch zu berücksichtigen, so dass hier ein Eingreifen seitens der Bedienperson der Trägermaschine nicht erforderlich ist.

Die Erfindung richtet sich auch auf eine Vorrichtung, insbesondere auf einen Seilbagger oder eine Ramme, die zur Durchführung eines Verfahrens zur Bodenverdichtung nach einem der Ansprüche 1 bis 8 ausgebildet ist. Insbesondere kann die Vorrichtung Einrichtungen zur Bestimmung der Nullpunkte, Einrichtungen zur Messung der Leistung des Windenmotors, Einrichtungen zur Lastmessung der Last am Seil, insbesondere Lastmessbolzen und/oder Dehnmesszellen, und/oder Einrichtungen zur Seillängenmessung umfassen.

Weitere Einzelheiten und Vorteile der Erfindung sind anhand der Figuren aufgezeigt. Dabei zeigen:
- Figur 1:: Seitenansicht einer Trägermaschine mit Rammgut und Seil.
- Figur 2:: Schematische Darstellung des Verfahrensablaufs.

Beim dynamischen Bodenverdichten wird ein Schlaggewicht bzw. Rammgut oder Rammgewicht ausgehend vom Boden auf eine gewünschte Fallhöhe beispielsweise mittels der Winde eines Seilbaggers angehoben. Auf dem höchsten Punkt des Schlaggewichts kann die Winde bzw. die Windenbremse losgelöst werden und so das Schlaggewicht auf eine zu verdichtende Bodenfläche fallengelassen werde.

Kurz vor, bei und/oder kurz nach dem Auftreffen des Rammgewichtes auf den Boden kann dieses bzw. dass das Rammgewicht haltende Seil abgebremst werden. Das erfindungsgemäße Verfahren ist dabei unabhängig davon, wie das Bremsverfahren genau durchgeführt wird, bzw. welche Art von Bremsvorrichtung hierfür verwendet wird.

Durch dieses Abbremsen kann das Schlappseil sehr kurz gehalten werden oder das Auftreten von Schlappseil kann ganz verhindert werden. Beim erneuten Anheben des Rammgewichtes kann die aktuelle Null-Position des Rammgewichtes ermittelt und auf der Maschine bzw. von der Regelungs-/Steuerungsvorrichtung der Maschine gespeichert werden.

Dieses Verfahren sowie ähnliche Alternativen dazu sind an sich bekannt. Voraussetzungen des der Erfindung zu Grunde liegenden Verfahrens sind die Folgenden:
- Beim Anheben der Last wird festgestellt, wo der aktuelle Nullpunkt ist, bei dem kein Schlappseil mehr vorherrscht. Dies kann geschehen durch eine neuerliche, automatische Null-Kalibrierung, oder bei entsprechender Sensorik (Leistung Windenmotor oder Lastmesssignale, die in jeglicher Weise die Last am Seil messen, beispielsweise Lastmessbolzen in Seilrollen, Dehnmesszellen im Seil oder in Seilverstrebungen) durch eine Messung, bei welcher Seillänge dieser Nullpunkt erreicht wird.
- Die Hubhöhe des Rammgewichtes wird durch eine Seillängenmessung (z.B. über die Anzahl der Umdrehungen Seilwinde) automatisch festgestellt, und kann auch eingestellt werden. Diese Hubhöhe kann für alle Schläge bzw. Verdichtungsvorgänge konstant sein.
- Beim herabfallenden Rammgewicht wird nun durch einen entsprechenden Regelungs-/Steuerungsvorgang das Rammgewicht vor dem, beim und/oder nach dem Auftreffen auf den Boden abgebremst um eine Schlappseilbildung zu verhindern.
- Beim neuerlichen Anheben der Last wird die neue Nullpunkt-Position festgestellt. Durch das Verdichten sollte dieser Punkt weiter unten liegen als die Nullpunkt-Position des vorhergehenden Verdichtungsvorgangs. Es kann hiervon allerdings auch Ausnahmen geben, wenn beispielsweise Einbrüche der Seitenwand bzw. der Umgebung des verdichteten Bereichs auftreten oder wenn der verdichtete Bereich mit Füllmaterial aufgefüllt wird. Hierzu soll weiter unten Bezug genommen werden.

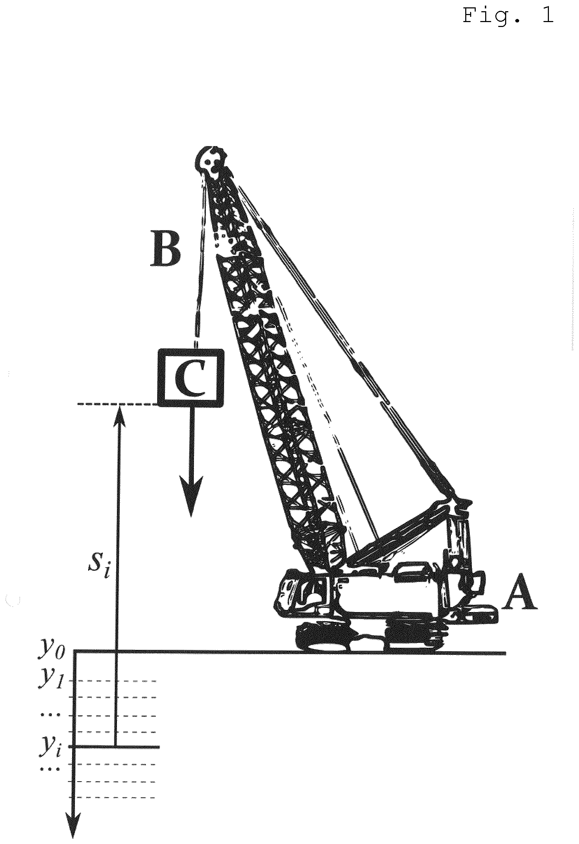

Das erfindungsgemäße Verfahren ist schematisch in Figur 1 gezeigt. Die Trägermaschine A ist über die Seile B oder das Seil B mit dem Rammgewicht C verbunden. Durch Fallenlassen des Rammgewichts C aus einer voreinstellbaren, gegebenenfalls konstant gehaltenen Fallhöhe K = sᵢ - yᵢ wird das Rammgewicht C beschleunigt und trifft bei kurz zuvor, gleichzeitiger und/oder kurz danach aktivierter Bremse auf den Boden und verdichtet das darunter liegende Erdreich. Die in Figur 1 gezeigten Entfernungen bzw. die Fallhöhe K können dabei von der Auflageebene der Trägermaschine A angegeben sein.

Der nächste Punkt yᵢ₊₁ sollte nun weiter unten liegen. Ausnahmen können dann auftreten, wenn beispielsweise eine Rammlochkante einstürzt oder Füllmaterial in das Rammloch nachgefüllt wurde. In den weiteren Schlägen werden sukzessive alle weiteren Null-Positionen über eine Messung der Seillänge ermittelt und gespeichert. Die Differenz zwischen zwei Null-Positionen Δyᵢ = yᵢ - yᵢ₊₁ wird in weiterer Folge als Verdichtungsfortschritt (pro Schlag) bezeichnet.

Daraus ergibt sich eine Serie von Verdichtungsfortschritten, anhand deren sich der Verlauf des Verdichtungsprozesses ablesen lässt. Anfänglich wird das Rammgewicht tief in den Boden eindringen und einen großen Fortschritt erzielen, dieser nimmt kontinuierlich ab. Durch Einbrüche des Materials in das Rammloch oder Einbringen von Verdichtungsmaterial kann sich ein negativer Fortschritt ergeben.

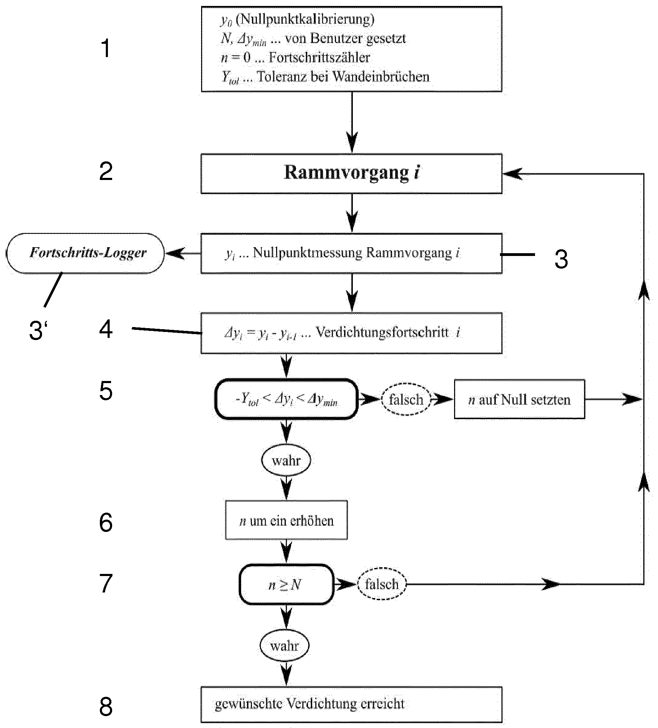

Gemäß Figur 2 können in einem Schritt 1 unterschiedliche Parameter zum Verdichtungsvorgang eingestellt werden, wobei eine automatische oder manuelle Nullpunktkalibrierung zur Einstellung eines ersten Nullpunkts y₀, die Anzahl der maximal durchzuführenden Verdichtungsvorgänge N bei Unterschreitung eines Mindestfortschritt Δyₘᵢₙ, der Mindestfortschritt Δyₘᵢₙ selbst, sowie ggf. zulässige Toleranzen bei Wandeinbrüchen Yₜₒₗ beziehungsweise deren mit -1 multiplizierter Wert eingestellt werden können. Automatisch oder manuell kann auch zu Beginn der Verdichtungsarbeiten ein Fortschrittszähler auf n = 0 gesetzt werden.

Im zweiten Schritt 2 wird ein Verdichtungs- bzw. Rammvorgang i durchgeführt, wobei der Fortschrittszähler im weiteren Verlauf des Verfahrens bei Schritt 6 jeweils um eins erhöht wird.

Schritt 3 umfasst die Nullpunktmessung zur Bestimmung des nach der Verdichtung bestehenden neuen Nullpunkts, wobei mittels eines Fortschritt-Loggers 3' der neue Nullpunkt abgespeichert bzw. geloggt werden kann.

Schritt 4 umfass die Bestimmung des Verdichtungsfortschritts und ggf. dessen Abspeicherung.

In Schritt 5 wird ermittelt, ob der Verdichtungsfortschritt größer als der Toleranzwert bei Wandeinbrüchen und kleiner als der Mindestfortschritt Δyₘᵢₙ ist.

Falls dies nicht zutrifft, wird der Fortschrittszähler auf null gesetzt und Schritte 2, 3, 4 und 5 werden wiederholt. Falls dies dagegen zutrifft, wird der Fortschrittszähler wie bereits erwähnt in Schritt 6 um eins erhöht und es wird in Schritt 7 ermittelt, ob die mittels des Fortschrittzählers ermittelte Anzahl der Verdichtungsvorgänge n größer oder gleich der maximalen Anzahl durchzuführender Verdichtungsvorgänge N bei Unterschreitung des Mindestfortschritts Δyₘᵢₙ ist.

Wie in Figur 2 gezeigt, bekommt der Fahrer bzw. die Bedienperson der Trägermaschine eine entsprechende Rückmeldung am Display bzw. auf einer anderweitigen Anzeige angezeigt, wenn nach einer definierbaren Anzahl N von Schlägen der Fortschritt pro Schlag unter einen definierbaren Mindestfortschritt Δyₘᵢₙ gesunken ist. Als Beispiel kann N = 2 angenommen werden, während Δyₘᵢₙ=10cm bestimmt sein kann. Wenn in zwei aufeinanderfolgenden Schlägen jeweils ein Verdichtungsfortschritt von unter 5 cm festgestellt wird, dann liegen diese beiden Werte unter dem vordefinierten Mindestfortschritt Δyₘᵢₙ=10cm, so dass der Fahrer die Anzeige 8 bekommt, dass ein gewünschter Verdichtungsgrad erreicht worden ist.

In weiterer Folge kann vorgesehen sein, dass alle Informationen (Position (z.B. über GPS), Verdichtung pro Schlag, Geschwindigkeit des Rammgutes beim Einschlag, Gewicht des Rammgutes, Zeit pro Schlag, Anzahl der Schläge, aufsummierte Verdichtung und weitere, u.a. daraus abgeleitete Größen) über den aktuellen Verdichtungspunkt bzw. -fortschritt lokal auf der Maschine in einem Fortschritts-Logger gespeichert werden und vom Maschinenbetreiber über lokale oder entfernte mit der Trägermaschine verbundenen Ausgabemechanismen (Drucker, kabellose- oder kabelgebundene Übertragungskanäle) in komprimierter Weise eingesehen werden können.

Vorteilhaft kann es erfindungsgemäß der Betriebsperson erleichtert werden, die korrekte Ausführung des Verdichtungsvorgangs zu überwachen. Dies erfolgt dadurch, dass verfahrensgemäß der Verdichtungsfortschritt mittels an der Trägermaschine üblicherweise vorhandener Einrichtungen überwacht wird. Es wird so vorteilhaft vermieden, dass Verdichtungsvorgänge über den tatsächlichen Verdichtungsbedarf hinaus durchgeführt oder zu früh, das heißt bei zu geringer Verdichtung abgebrochen werden. Hierzu müssen keine zusätzlichen Messvorrichtungen vorgesehen sondern es können die an der Trägermaschine vorhandenen Einrichtungen entsprechend genutzt bzw. umprogrammiert werden. Dieses macht es möglich, das Verfahren an bereits bestehenden Trägermaschinen einfach nachzurüsten und auch bei neu herzustellenden Trägermaschinen günstig umzusetzen.

## Patentansprüche

1. Verfahren zur Bodenverdichtung mittels einer Trägermaschine (A) mit an wenigstens einem Seil (B) vorgesehenem Rammgut (C) und mit einer Regelungs-/Steuerungsvorrichtung, wobei das Verfahren die Schritte umfasst:
Anheben des Rammguts (C) von der zu verdichtenden Bodenfläche, wobei ein Nullpunkt (y₀) gespeichert wird, bei dem kein Schlappseil vorhanden ist;
Anheben des Rammguts (C) auf eine Hubhöhe (so);
Durchführen eines Verdichtungsvorgangs durch Herabfallenlassen des Rammguts (C) auf die zu verdichtende Bodenfläche aus einer Fallhöhe (K);
Neuerliches Anheben des Rammguts (C) von der zu verdichtenden Bodenfläche, wobei ein weiterer Nullpunkt (y₁) gespeichert wird, bei dem kein Schlappseil vorhanden ist;
Bestimmen und Speichern eines Verdichtungsfortschritts Δyᵢ; und
Wiederholen der vorherigen Schritte, bis die Verdichtungsfortschritte Δyᵢ einer vorbestimmten Anzahl (N) von aufeinanderfolgenden Verdichtungsvorgängen kleiner als oder gleich wie ein vorbestimmter Mindestfortschritt sind.

2. Verfahren nach Anspruch 1, **dadurch gekennzeichnet, dass** das Verfahren anzeigt und/oder beendet wird, wenn die Verdichtungsfortschritte Δyᵢ einer vorbestimmten Anzahl von aufeinanderfolgenden Verdichtungsvorgängen kleiner als oder gleich wie ein vorbestimmter Mindestfortschritt Δyₘᵢₙ sind.

3. Verfahren nach Anspruch 1 oder 2, **dadurch gekennzeichnet, dass** der Nullpunkt (yᵢ) durch eine Null-Kalibrierung bestimmt und/oder durch eine Sensorik erfasst wird.

4. Verfahren nach Anspruch 3, **dadurch gekennzeichnet, dass** die Sensorik zur Erfassung des Nullpunkts (yᵢ) die Leistung eines Windenmotors der Trägermaschine (A) und/oder Lastmesssignale der Last am Seil (B), insbesondere mittels Lastmessbolzen in Seilrollen und/oder Dehnmesszellen im oder am Seil oder in Seilverstrebungen, misst.

5. Verfahren nach einem der vorhergehenden Ansprüche, **dadurch gekennzeichnet, dass** die Hubhöhe (sᵢ) des Rammguts (C) über eine Seillängenmessung insbesondere über die Anzahl der Umdrehungen der Seilwinde automatisch festgestellt oder manuell eingestellt wird.

6. Verfahren nach einem der vorhergehenden Ansprüche, **dadurch gekennzeichnet, dass** die Hubhöhe (sᵢ) für alle Verdichtungsvorgänge konstant ist.

7. Verfahren nach einem der vorhergehenden Ansprüche, **dadurch gekennzeichnet, dass** das Seil (B) beim, vor dem und/oder nach dem Auftreffen des Rammguts (C) auf die zu verdichtende Bodenfläche abgebremst wird.

8. Vorrichtung, insbesondere Seilbagger oder Ramme, mit einer Trägermaschine (A), einem Seil (B) und einer Regelungs-/Steuerungsvorrichtung, wobei die Vorrichtung zur Durchführung eines Verfahrens zur Bodenverdichtung nach einem der Ansprüche 1 bis 7 ausgebildet ist, wobei die Vorrichtung eingerichtet ist, anzuzeigen und/oder das Verfahren automatisch zu beenden, wenn die Verdichtungsfortschritte einer vorbestimmten Anzahl von aufeinanderfolgenden Verdichtungsvorgängen kleiner als oder gleich wie der vorbestimmte Mindestfortschritt sind.

## Claims

1. A method of soil compaction by means of a base machine (A) having ram material (C) provided at at least one cable (B) and having a regulation/control apparatus, wherein the method comprises the steps:
raising the ram material (C) from the land area to be compacted, with a zero point (y₀) being stored at which no slackline is present;
raising the ram material (C) to a lift height (s₀);
carrying out a compaction procedure by dropping the ram material (C) from a drop height (K) onto the land area to be compacted;
again raising the ram material (C) from the land area to be compacted, with a further zero point (y₁) being stored at which no slackline is present;
determining and storing a compaction progress Δyᵢ; and
repeating the previous steps until the compaction progresses Δyᵢ of a predefined number (N) of consecutive compaction procedures are smaller than or equal to a predefined minimum progress.

2. A method in accordance with claim 1, **characterized in that** the method displays and/or is ended when the compaction progresses Δyᵢ of a predefined number of consecutive compaction procedures is smaller than or equal to a predefined minimum progress Δyₘᵢₙ.

3. A method in accordance with claim 1 or claim 2, **characterized in that** the zero point (yᵢ) is determined by a zero calibration and/or is detected by a sensor system.

4. A method in accordance with claim 3, **characterized in that** the sensor system for detecting the zero point (yᵢ) measures the power of a winch motor of the base machine (A) and/or load measurement signals of the load at the cable (B), in particular by means of load measuring pins in cable pulleys and/or strain measuring cells in or at the cable or in cable struts.

5. A method in accordance with one of the preceding claims, **characterized in that** the lift height (sᵢ) of the ram material (C) is automatically determined or is manually set via a cable length measurement, in particular via the number of revolutions of the cable winch.

6. A method in accordance with one of the preceding claims, **characterized in that** the lift height (sᵢ) is constant for all compaction procedures.

7. A method in accordance with one of the preceding claims, **characterized in that** the cable (B) is braked during, before and/or after the landing of the ram material (C) on the land area to be compacted.

8. An apparatus, in particular a cable-operated excavator or a rammer, having a base machine (A), a cable (B) and a regulation/control apparatus, wherein the apparatus is configured for carrying out a method of soil compaction in accordance with one of the claims 1 to 7, with the apparatus being adapted to display and/or end the method automatically when the compaction progresses of a predefined number of consecutive compaction procedures are smaller than or equal to a predefined minimum progress.

## Revendications

1. Procédé de compactage du sol au moyen d'un engin porteur (A) doté d'un matériel de battage (C) prévu sur au moins un câble (B) et doté d'un dispositif de régulation/contrôle, le procédé comprenant les étapes consistant à :
soulever le matériel de battage (C) de la surface de sol à compacter, un point origine (y₀), pour lequel il n'y a pas de câble mou, étant enregistré ;
soulever le matériel de battage (C) à une hauteur de levage (s₀) ;
effectuer un processus de compactage en laissant tomber le matériel de battage (C) sur la surface de sol à compacter à partir d'une hauteur de chute (K) ;
soulever à nouveau le matériel de battage (C) de la surface de sol à compacter, un autre point origine (y₁), pour lequel il n'y a pas de câble mou, étant enregistré ;
déterminer et enregistrer un progrès de compactage Δyᵢ ; et
répéter les étapes précédentes jusqu'à ce que les progrès de compactage Δyᵢ d'un nombre prédéfini (N) de processus de compactage successifs soient inférieurs ou égaux à un progrès minimal prédéfini.

2. Procédé selon la revendication 1, **caractérisé en ce que** le procédé indique et/ou est arrêté quand les progrès de compactage Δyᵢ d'un nombre prédéfini de processus de compactage successifs sont inférieurs ou égaux à un progrès minimal prédéfini Δyₘᵢₙ.

3. Procédé selon la revendication 1 ou 2, **caractérisé en ce que** le point origine (yᵢ) est déterminé par un étalonnage du zéro et/ou est détecté par un système de capteurs.

4. Procédé selon la revendication 3, **caractérisé en ce que** le système de capteurs pour détecter le point origine (yᵢ) mesure la puissance d'un moteur de treuil de l'engin porteur (A) et/ou des signaux de mesure de charge de la charge sur le câble (B), en particulier au moyen d'axes dynamométriques dans des poulies et/ou de cellules extensomètres dans ou sur le câble ou dans des entretoisements de câble.

5. Procédé selon l'une des revendications précédentes, **caractérisé en ce que** la hauteur de levage (sᵢ) du matériel de battage (C) est fixée automatiquement ou réglée manuellement par le biais d'une mesure de la longueur du câble en particulier par le biais du nombre de tours du treuil à câble.

6. Procédé selon l'une des revendications précédentes, **caractérisé en ce que** la hauteur de levage (sᵢ) est constante pour tous les processus de compactage.

7. Procédé selon l'une des revendications précédentes, **caractérisé en ce que** le câble (B) est freiné pendant, avant et/ou après l'impact du matériel de battage (C) sur la surface de sol à compacter.

8. Dispositif, en particulier excavateur à câble ou sonnette, comprenant un engin porteur (A), un câble (B) et un dispositif de régulation/contrôle, le dispositif étant conçu pour exécuter un procédé de compactage du sol selon l'une des revendications 1 à 7, le dispositif étant configuré pour indiquer et/ou arrêter automatiquement le procédé, quand les progrès de compactage d'un nombre prédéfini de processus de compactage successifs sont inférieurs ou égaux au progrès minimal prédéfini.
